# DEMANDE DE BREVET EUROPEEN

(11) **EP 2 114 096 A1**
(43) Date de publication de la demande: **04.11.2009**
(21) Numéro de dépôt: 09158801.2
(22) Date de dépôt: 27.04.2009
(51) Int. Cl.: H04W 4/06

(54) **Procede de radiocommunication cellulaire utilisant une technique de segmentation PUSC (Partial Usage of the Sub-Channels)**

(30) Priorité: 28.04.2008 FR 0852837
(71) Demandeur: Alcatel Lucent, 75008 Paris (FR)
(72) Inventeur: De Juan Huarte, Federico, 78141 Velizy (FR); Kumar, Vinod, 91620 Nozay (FR)
(74) Mandataire: Ameline, Jean-Paul B.C.

(57) **Abrégé**

Dans une infrastructure de réseau cellulaire comprenant une pluralité de stations de base émettant des signaux de radiofréquence sur une porteuse subdivisée en une pluralité de sous-porteuses reparties dans des sous-canaux OFDM, les, sous-canaux étant groupés en une pluralité de segments suivant une technique de segmentation PUSC, on partage les segments en au moins deux groupes, dont un premier groupe comprenant au moins un segment ayant, en accès multiple à division spatiale (SOMA), Un premier facteur de réutilisation, et dédié à l'émission de signaux de radiofréquence en mode diffusion, et un deuxième, groupe comprenant plusieurs segments ayant, en accès multiple à division spatiale (SDMA), un deuxième facteur de réutilisation, et dédiés à l'émission de signaux de radiofréquence en mode point-à-point.

## Description

L'invention a trait au domaine des radiocommunications cellulaires.

Les réseaux de mobiles utilisent les voies hertziennes pour l'établissement des communications. La technologie employée, dénommée boucle locale radio (BLR), est une technologie sans fil bidirectionnelle permettant de connecter par voie hertzienne un ou plusieurs utilisateurs à des stations de bases interconnectées par un réseau terrestre et à chacune desquelles correspond une couverture radio appelée cellule.

Si, dans les réseaux de type hertziens, les bandes de fréquences attribuées pour les liaisons BLR varient suivant les régions, la bande passante disponible est limitée (généralement quelques dizaines de MHz) et il est dans l'intérêt de tout opérateur réseau de l'utiliser de la manière la plus large possible.

Dans une utilisation de type radiodiffusion (broadcast), un signal unique est diffusé sur un territoire donné, indépendamment des destinataires. Le même signal étant diffusé par l'ensemble des stations de base de l'infrastructure, la question des interférences intercellulaires ne se pose pas, et l'on constate même au niveau des stations réceptrices un gain en réception grâce à la combinaison de signaux de provenances différentes.

Dans une configuration multiutilisateurs de type point à point (unicast), la question des interférences se pose toutefois puisque la bande passante est partagée par les stations réceptrices. Une technique classique d'allocation des ressources physiques sur l'interface radio est le partage de la bande passante en secteurs non interférents (multiplexage spatial ou SDMA, Space Division Multiple Access) à chacun desquels est attribuée une portion de la bande passante, dite porteuse, émise par une antenne directive. Le nombre de secteurs du partage est dénommé facteur de réutilisation. Lorsque le facteur de réutilisation est égal à 1, la porteuse utilise l'ensemble de la bande passante. L'augmentation du facteur de réutilisation maximise la distance entre deux porteuses utilisant la même fraction de bande passante, mais conduit à une multiplication du nombre d'antennes directives (coûteuses) sur une même station de base. Un autre inconvénient de cette technique de partage spatial est que tout terminal amené à changer de secteur (transfert intersectoriel ou handover) doit en même temps changer de fréquence. S'agissant du partage de la bande dans un même secteur au profit d'utilisateurs multiples, des techniques de multiplexage temporel (TDMA, Time Division Multiple Access) peuvent être employées.

Une technique alternative d'allocation des ressources est le multiplexage par code (CDMA, Code Division Multiple Acess), consistant à allouer toute la bande passante pour une même station de base mais en codant les signaux pour chaque station mobile, ce qui permet d'éviter les interférences dans les zones intercellulaires. Cette technique évite d'avoir recours à une sectorisation spatiale. Par abus de langage, on y fait toutefois référence sous la terminologie SDMA par l'attribution d'un facteur de réutilisation de 1 (c'est-à-dire pas de réutilisation). Cette technique, qui a fait son apparition commerciale à la fin des années 1990, a toutefois vu ses bénéfices grevés par la complexité de son implémentation, surtout en matière de régulation de la puissance.

Une des techniques d'allocation des ressources consiste à effectuer un multiplexage orthogonal à répartition fréquentielle (OFDM, Orthogonal Frequency Division Multiplexing), suivant lequel la porteuse principale, soit l'ensemble de la bande passante disponible, est divisée en plusieurs sous-porteuses connexes de fréquences orthogonales, telles que pour une fréquence donnée la puissance est à la fois maximale sur une sous-porteuse et nulle sur la sous-porteuse connexe. La technologie WiMAX (Worlwide Interoperability for MicroWave Access), normalisée par le groupe de travail 802.16 de l'IEEE, propose d'associer à la technique OFDM une technique d'adaptation du codage à la qualité de la communication (AMC, Adaptative Modulation and Coding), en vertu de laquelle les données sont codées différemment selon l'éloignement de la station mobile de la station de base (en pratique, les codages successifs sont, du plus près au plus loin de la station de base : 64QAM, 16 QAM et QPSK, qui offrent des taux de transmission décroissants, respectivement de 6, 4 et 2 bits par baud), et une technique d'allocation granulaire des ressources (SOFDMA, scalable OFDM Access) consistant à coordonner des multiplexages temporel et fréquentiel, de sorte qu'une porteuse est subdivisée en un certain nombre de sous-porteuses (multiplexage fréquentiel) pour des intervalles de temps prédéterminés (multiplexage temporel). L'allocation de la bande passante est faite par crêtes (bursts) à une fréquence et pendant un intervalle de temps prédéterminés. Une application de l'OFDM aux transferts intercellulaires en douceur (soft handover) est décrite dans les demandes de brevet américain n° US 2005/088020 et US 2005/0288027.

Du fait de la convergence des technologies fixe et mobile, il existe aujourd'hui un besoin de trouver une technique permettant de transmettre commodément le multimédia par voie hertzienne : à la fois voix, vidéo et données (triple play), c'est-à-dire une combinaison de signaux transmis en mode diffusion (broadcast) et de signaux transmis en mode point-à-point (unicast). Or, en l'état actuel, aucune des techniques susvisées ne permet de répondre de manière satisfaisante à ce besoin.

L'invention vise à proposer une solution permettant de transmettre de manière commode le multimédia par voie hertzienne, combinant les modes diffusion et point-à-point, sans notamment rendre plus complexe la conception des stations mobiles.

À cet effet, l'invention propose, suivant un premier aspect, un procédé de radiocommunication cellulaire entre une station mobile et une infrastructure de réseau cellulaire comprenant une pluralité de stations de base, dans lequel une station de base émet des signaux de radiofréquence sur une porteuse subdivisée en une pluralité de sous-canaux suivant une technique de multiplexage orthogonal à répartition fréquentielle (OFDM), les sous-canaux étant groupés en une pluralité de segments suivant une technique de segmentation avec utilisation partielle des sous-canaux (PUSC), caractérisé en ce que les segments sont partagés en au moins deux groupes, à savoir :
- un premier groupe comprenant au moins un segment ayant un facteur de réutilisation égal à 1, dédié à l'émission de signaux de radiofréquence en mode diffusion ;
- un deuxième groupe comprenant au moins un segment ayant un facteur de réutilisation supérieur ou égal à deux, dédiés à l'émission de signaux de radiofréquence en mode point-à-point.

D'autres objets et avantages de l'invention apparaîtront à la lumière de la description faite ci-après en référence aux dessins annexés dans lesquels :
La figure 1 est un schéma représentant, de manière simplifiée, une infrastructure de réseau cellulaire suivant l'invention ;
La figure 2 est un diagramme illustrant un procédé selon l'invention, mis en oeuvre au sein d'une infrastructure de réseau cellulaire tel que représenté sur la figure 1.

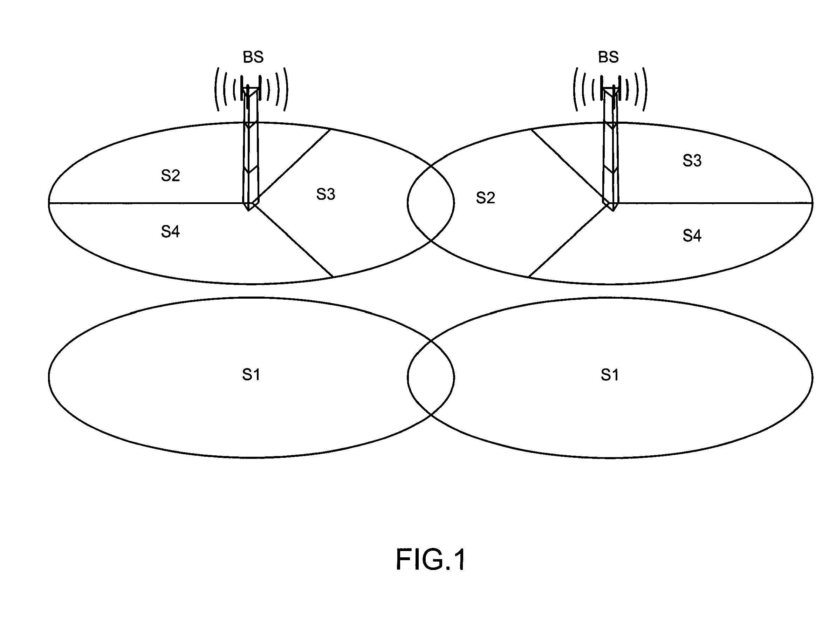

Sur la figure 1 est représentée une infrastructure de réseau cellulaire comprenant une pluralité de relais radios appelés stations de base ou BS (Base Station) interconnectées par un réseau filaire et commandées, via un commutateur ayant la gestion des stations de base, par un sous-réseau muni d'un registre global ou HLR (Home Location Register) sur lequel sont enregistrés les profils des abonnés.

Chaque BS émet par voie hertzienne des signaux de radiofréquence à destination de terminaux mobiles ou SS (Subscriber Station) en possession des abonnés, dans une zone géographique sensiblement circulaire appelée cellule. Les BS sont implantées sur un territoire donné de sorte que leurs cellules se recouvrent partiellement, de manière à assurer la connexité de la couverture et donc la continuité du service. Pour des raisons de commodité, seules deux BS adjacentes ont été représentées sur la figure 1.

La transmission hertzienne des signaux de radiofréquence passe par une interface radio, appelée couche physique ou PHY (Physical layer), chaque BS émettant les signaux en voie descendante ou DL (Down Link), c'est-à-dire vers les terminaux, sur une porteuse (carrier) empruntant un premier groupe de canaux radio, tandis que, réciproquement, les terminaux émettent des signaux de radiofréquence en voie montante ou UL (Up Link) via un deuxième groupe de canaux radio, distinct du premier. La répartition des canaux sur chaque voie peut se faire selon un multiplexage fréquentiel (FDD, pour « Frequency Division Multiplex »), ou selon un multiplexage temporel (TDD, pour « Time Division Multiplex »). Les canaux sont répartis dans des bandes passantes situées aux environs d'une fréquence prédéterminée dépendant de l'allocation à laquelle l'opérateur réseau (auprès duquel sont inscrits les abonnés) a accès (par exemple 2.4 GHz ou 3.5 GHz pour WiMAX). La porteuse utilise par exemple une bande passante de 14 MHz ou de 20MHz (il est par ailleurs envisagé d'utiliser des porteuses de bande passante 100 MHz dans les systèmes de quatrième génération).

Les canaux radio étant partagés entre plusieurs SS, chaque BS étant configurée pour assurer des communications non interférentes avec chaque SS, suivant une technique prédéterminée d'accès consistant à allouer la ressource radio en fonction à la fois de la fréquence et du temps.

De fait, chaque BS est configurée, au niveau MAC (Medium Access Control) de la couche PHY, pour subdiviser la porteuse en une pluralité de sous-porteuses à fréquences orthogonales réparties dans des sous-canaux suivant une technique de multiplexage orthogonal à répartition fréquentielle (OFDM).

Plus précisément, la BS est configurée suivant la technologie WiMax mobile (en application de la norme 802.16e établie par le groupe de travail 802.16 de l'IEEE), et utilise une technique d'allocation granulaire des ressources (SOFDMA, scalable OFDM Access) suivant laquelle un multiplexage temporel et un multiplexage fréquentiel sont coordonnés de sorte que la porteuse est subdivisée en sous-porteuses à fréquences orthogonales pour des intervalles de temps prédéterminés.

Les sous-porteuses sont de plus rassemblées en sous-canaux (subchannels) sur tout ou partie de la bande passante. L'allocation des sous-canaux à chaque SS est faite par crêtes (bursts) à une fréquence et pendant un intervalle de temps prédéterminés.

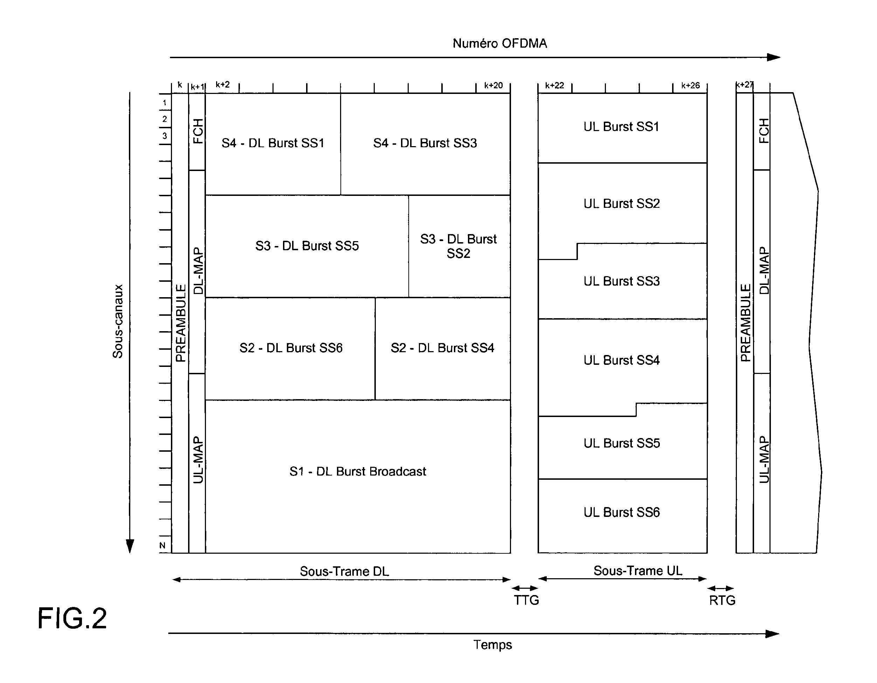

Comme cela est illustré sur la figure 2, les sous-canaux sont en outre groupés en une pluralité de segments conformément à une technique de segmentation avec utilisation partielle des sous-canaux (Partial Use of Subchannels, PUSC), suivant laquelle, à chaque instant, il existe toujours au moins deux ensembles de sous-canaux (segments) faisant l'objet d'une allocation distincte en émission, contrairement à la technique de segmentation avec utilisation totale des sous-canaux (Full usage of Subchannels, FUSC), suivant laquelle les sous-canaux sont - temporairement - tous alloués à la même émission.

Les techniques SOFDMA et PUSC sont relativement récentes. Pour plus de précisions les concernant, l'homme du métier pourra se référer aux documents suivants :
- « Air Interface for Fixed and Mobile Broadband Wireless Access Systems », Standard 802.16e de l'IEEE, Février 2006;
- « Mobile WiMAX - Part I: A Technical Overview and Performance Evaluation », WiMAX Forum, Août 2006;
- « Scalable OFDMA Physical Layer in IEEE 802.16 WirelessMAN », Intel Technology Journal, Volume 08, Issue 03, August 20, 2004;
- « Deployment Scenarios with reuse 1 (utilizing FUSC and PUSC concept) », IEEE P802.22, juin 2006;
- « Parametric Channel Estimation in Reuse-1 OFDM Systems », M.R. Raghavendra et al, Indian Institute of Technology Madras, India, 24-28 juin 2007;
- « Interference Mitigation Strategies for WiMax Networks », Riato et al, Dipartimento di Elettronica e Informazione, Politecnico di Milano, Milano, Italy, 17-19 octobre 2007 ;
- Le WiMAX devient mobile - de nouvelles solutions de mesure s'imposent », in Actualités de Rhode & Schwarz, N° 190 (2006/II).

Les segments sont partagés en deux groupes distincts. Un premier groupe comprend au moins un segment dédié à l'émission de signaux de radiofréquence en mode broadcast, c'est-à-dire que ces signaux sont diffusés sans considération des destinataires. Dans l'exemple illustré, le premier groupe comprend un unique segment S1. Les canaux correspondants sont alloués par la BS sans division spatiale, c'est-à-dire que la BS émet sur les canaux du segment S1 sur un secteur unique couvrant la totalité de la cellule. En d'autres termes, dans la terminologie de la technique de multiplexage spatial ou d'accès multiple à division spatiale (SDMA, Spatial Division Multiple Access), le facteur de réutilisation (reuse) lié au premier groupe de segments (en l'occurrence au segment S1) est égal à 1 (reuse-1). Il est à noter que, dans la mesure où le ou les segments du premier groupe ne font l'objet d'aucune division spatiale, on utilise cette terminologie par pure convention.

Un deuxième groupe comprend au moins un segment dédié à l'émission de signaux de radiofréquence en mode point-à-point (unicast). Dans l'exemple illustré, le deuxième groupe comprend trois segments S2, S3, S4. Les canaux correspondants sont alloués par la BS suivant une technique d'accès multiple à division spatiale (SDMA), les segments du deuxième groupe ayant de ce fait un facteur de réutilisation supérieur ou égal à deux (reuse-N≥2), en l'occurrence égal à trois (reuse-3). Concrètement, les canaux correspondant aux segments S2, S3, S4 sont émis de manière directive sur trois secteurs connexes non interférents répartis à 120° sur la cellule de la BS.

Comme cela est illustré sur la figure 1, les BS adjacentes sont configurées pour que deux segments identiques du deuxième groupe ne soient pas interférents dans les zones intercellulaires. En l'occurrence, le chevauchement des cellules se produit sur les segments S3 et S2 des deux BS, respectivement, ce qui permet d'assurer la continuité du service unicast lors du transfert intercellulaire (handover) des SS.

En revanche, les segments S1 du premier groupe sont interférents dans les zones intercellulaires, ce qui présente un avantage pour les SS puisqu'en mode broadcast l'interférence génère un gain en réception. Cette configuration permet donc de faire bénéficier les SS de la macrodiversité pour la partie radiodiffusée des signaux.

Le déploiement proposé ci-dessus, qui ne met en jeu qu'une seule porteuse, permet ainsi à un SS monobande (monocarrier) de bénéficier simultanément de services unicast et broadcast, ce qui permet de réaliser un vrai triple-play (voix, vidéo, données).

La figure 1 illustre la structure des trames échangées entre une BS configurée comme décrit précédemment et une pluralité de SS, en l'occurrence au nombre de six (SS1 à SS6). Dans l'exemple illustré, les sous-canaux de la porteuse, utilisant une bande passante de 10 MHz, sont groupés en quatre segments de 2,5 MHz chacun, à savoir un segment S1 reuse-1, et trois segments S2, S3, S4 reuse-3.

Cette configuration est un exemple, dans lequel la bande passante est divisée en une pluralité de groupes de segments (dans l'exemple précédent, deux groupes), sans pour autant que la répartition de la bande entre les groupes soit uniforme. On peut par exemple considérer, sans sortir du cadre de l'invention, une répartition d'une bande passante de 10 MHz en deux groupes, l'un occupant une bande passante de 1 MHz, et dédié aux services de diffusion, et l'autre occupant une bande passante de 9 MHz, et dédié aux communications en mode point-à-point, distribuée sur trois segments présentant un facteur de réutilisation égal à 3 (chaque segment occupant donc 3 MHz pour le mode reuse-3 sur une porteuse de 10 MHz).

Une autre manière d'envisager la répartition de la bande passante disponible sur une porteuse BP_{carrier} selon l'invention consiste à déterminer un ensemble de N sous-ensembles sur lesquels on distribue BP_{carrier} en pourcentage, les N sous-ensembles constituant une partition de l'ensemble constitué par la bande passante BP_{carrier}. Chaque groupe considéré correspond à un mode de communication parmi le mode point-à-point (unicast), point-à-multipoint (multicast) et diffusion (broadcast). Par exemple, lorsque N=2, on divise BP_{carrier} en deux sous-ensembles, non nécessairement connexes, BP_{carrier}(i), pour i=1,2. On attribue à chaque sous-ensemble un pourcentage de BP_{carrier} pour définir la partition. Dans l'exemple précédent, on peut attribuer à BP_{carrier}(1) une part représentant 10% de BP_{carrier}, et à BP_{carrier}(N) le reliquat, soit 90% de BP_{carrier}. Chaque sous-ensemble BP_{carrier}(i) est ensuite associé à un nombre n(i) de segments présentant un même facteur de réutilisation, qui peut être choisi en fonction du mode de communication associé au sous-ensemble BP_{carrier}(i).

Dans l'exemple précédent, la bande passante BP_{carrier} est égale à 10 MHz (d'autres valeurs pourraient être envisagées à titre d'illustration, comme par exemple 5 MHz, 7MHz ou 20 MHz). Elle est divisée en N=2 sous-ensembles, de parts respectives 10% et 90%. BP_{carrier}(1) occupe donc une bande de 1 MHz, et BP_{carrier}(2) occupe une bande de 9 MHz. On attribue ensuite à chaque sous-ensemble un ensemble de segments présentant un facteur de réutilisation donné : on associe à BP_{carrier}(1) un seul segment avec un facteur de réutilisation égal à 1 (ce qui correspond donc à la bande attribuée à BP_{carrier}(1)), et à BP_{carrier}(2) trois segments présentant un facteur de réutilisation égal à 3 (donc occupant chacun 3 MHz, ce qui correspond bien en cumul à la bande passante attribuée à BP_{carrier}(2)). Le sous-ensemble BP_{carrier}(1) est utilisé pour des communications en mode diffusion, tandis que le sous-ensemble BP_{carrier}(2) est utilisé pour des communications en mode point-à-point.

Chaque trame (frame) est divisée en sous-trames (sub-frame) montante (UL) et descendante (DL), séparées par des intervalles de transition, respectivement en émission/réception (TTG, Transmission/Reception Transition Gap) et en réception/émission (RTG, Reception/Transmission Transition Gap).

Chaque sous-trame DL comprend un préambule suivi d'un en-tête de contrôle de trame (FCH, Frame Control Header), et de cartes d'allocation des canaux en montée (UL-Map) et en descente (DL-Map).

Une crête radiodiffusée descendante (DL-Broadcast Burst) est ensuite allouée sur les canaux du segment S1, tandis que des crêtes point-à-point sont allouées sur les canaux des segments S2, S3 et S4 aux SS suivant la segmentation PUSC.

On voit que les canaux du segment S1 sont réservés à la radiodiffusion. A contrario, les crêtes montantes (UL bursts) émises à destination de la BS par les SS peuvent utiliser l'ensemble des canaux, comme illustré sur la figure 2.

## Revendications

1. Procédé de radiocommunication cellulaire entre une station mobile et une infrastructure de réseau cellulaire comprenant une pluralité de stations de base, dans lequel une station de base émet des signaux de radiofréquence sur une porteuse subdivisée en une pluralité de sous-porteuses réparties dans des sous-canaux suivant une technique de multiplexage orthogonal à répartition fréquentielle (OFDM), les sous-canaux étant groupés en une pluralité de segments suivant une technique de segmentation avec utilisation partielle des sous-canaux (PUSC), dans lequel les segments sont partagés en au moins deux groupes, dont :
- un premier groupe comprenant au moins un segment ayant, en accès multiple à division spatiale (SDMA), un premier facteur de réutilisation, et dédié à l'émission de signaux de radiofréquence en mode diffusion ; et
- un deuxième groupe comprenant plusieurs segments ayant, en accès multiple à division spatiale (SDMA), un deuxième facteur de réutilisation, et dédiés à l'émission de signaux de radiofréquence en mode point-à-point.

2. Procédé selon la revendication 1, dans lequel le deuxième facteur de réutilisation est supérieur ou égal à 2.

3. Procédé selon la revendication 1 ou 2, dans lequel le premier facteur de réutilisation est égal à 1.

4. Procédé selon l'une des revendications 1 à 3, dans lequel le premier groupe comprend un unique segment.

5. Procédé selon l'une des revendications 1 à 4, dans lequel le deuxième groupe comprend trois segments.

6. Procédé selon l'une des revendications 1 à 5, dans lequel la porteuse utilise une bande passante de 10 MHz.

7. Station de base pour une infrastructure de réseau cellulaire agencée pour émettre sur au moins une porteuse de fréquence prédéterminée, ladite station étant en outre agencée pour subdiviser ladite porteuse en une pluralité de sous-porteuses réparties dans des sous-canaux suivant une technique de multiplexage orthogonal à répartition fréquentielle (OFDM), les sous-canaux étant groupés en une pluralité de segments suivant une technique de segmentation avec utilisation partielle des sous-canaux (PUSC), ladite station de base étant en outre agencée pour partager les segments en deux groupes distincts, dont :
- un premier groupe comprenant au moins un segment ayant, en accès multiple à division spatiale (SDMA), un premier facteur de réutilisation, et dédié à l'émission de signaux de radiofréquence en mode diffusion ; et
- un deuxième groupe comprenant plusieurs segments ayant, en accès multiple à division spatiale (SDMA), un deuxième facteur de réutilisation , et dédiés à l'émission de signaux de radiofréquence en mode point-à-point.

8. Station de base selon la revendication 7, agencée pour partager les segments en deux groupes distincts, le deuxième groupe comprenant plusieurs segments ayant un deuxième facteur de réutilisation supérieur ou égal à deux.

9. Station de base selon l'une des revendications 7 ou 8, agencée pour partager les segments en deux groupes distincts, le premier groupe comprenant au moins un segment ayant un premier facteur de réutilisation égal à un.

10. Infrastructure de réseau cellulaire comprenant une pluralité de stations de base selon l'une quelconque des revendications 7 à 9.

11. Module radio pour station de base dans une infrastructure de réseau cellulaire, agencé pour émettre sur au moins une porteuse de fréquence prédéterminée, ledit module étant en outre agencé pour subdiviser ladite porteuse en une pluralité de sous-porteuses réparties dans des sous-canaux suivant une technique de multiplexage orthogonal à répartition fréquentielle (OFDM), les sous-canaux étant groupés en une pluralité de segments suivant une technique de segmentation avec utilisation partielle des sous-canaux (PUSC), ledit module étant en outre agencé pour partager les segments en deux groupes distincts, dont :
- un premier groupe comprenant au moins un segment ayant, en accès multiple à division spatiale (SDMA), un premier facteur de réutilisation, et dédié à l'émission de signaux de radiofréquence en mode diffusion ; et
- un deuxième groupe comprenant plusieurs segments ayant, en accès multiple à division spatiale (SDMA), un deuxième facteur de réutilisation, et dédiés à l'émission de signaux de radiofréquence en mode point-à-point.
